(19) Europäisches Patentamt
European Patent Office
Office européen des brevets

(11) **EP 2 872 314 B1**

(12) **FASCICULE DE BREVET EUROPEEN**

(45) Date de publication et mention
de la délivrance du brevet:
**29.06.2016 Bulletin 2016/26**

(21) Numéro de dépôt: **13756558.6**

(22) Date de dépôt: **09.07.2013**

(51) Int Cl.:
**B29C 49/78** *(2006.01)*   **B29C 49/06** *(2006.01)*
**B29C 49/12** *(2006.01)*   **G05B 19/18** *(2006.01)*
**B29C 49/64** *(2006.01)*   **B29C 49/36** *(2006.01)*

(86) Numéro de dépôt international:
**PCT/FR2013/051641**

(87) Numéro de publication internationale:
**WO 2014/009654 (16.01.2014 Gazette 2014/03)**

(54) **SYSTÈME DE COMMANDE D'UNE UNITÉ DE FORMAGE DE RÉCIPIENTS COMPRENANT UNE UNITÉ DE CONTRÔLE MAÎTRE ET DES CONTRÔLEURS ESCLAVES**

STEUERUNGSSYSTEM FÜR EINE BEHÄLTERFORMUNGSEINHEIT MIT EINER ÜBERGEORDNETEN STEUERUNGSEINHEIT UND EINER UNTERGEORDNETEN STEUERUNGSEINHEIT

CONTROL SYSTEM OF A CONTAINER FORMING UNIT COMPRISING A MASTER CONTROL UNIT AND SLAVE CONTROLLERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.07.2012 FR 1256832**

(43) Date de publication de la demande:
**20.05.2015 Bulletin 2015/21**

(73) Titulaire: **Sidel Participations**
**76930 Octeville sur Mer (FR)**

(72) Inventeur: **DEAU, Thierry**
**F-76930 Octeville Sur Mer (FR)**

(74) Mandataire: **Siloret, Patrick**
**Sidel Participations**
**Avenue de la Patrouille de France**
**76930 Octeville-sur-Mer (FR)**

(56) Documents cités:
**EP-A2- 1 306 195     FR-A1- 2 909 305**
**JP-A- 4 184 502**

**Description**

L'invention a trait au domaine du formage des récipients à partir d'ébauches en matière thermoplastique tel que PET (polyéthylène téréphtalate), le terme « ébauche » couvrant tout autant une préforme venue d'injection qu'un récipient intermédiaire ayant subi une ou plusieurs opérations temporaires de formage.

Le formage d'un récipient est effectué par soufflage ou étirage soufflage à partir d'une ébauche ayant subi une opération préalable de chauffe. L'ébauche chaude est introduite dans un moule à l'empreinte du récipient ; un fluide (notamment un gaz tel que de l'air) sous pression est alors injecté dans l'ébauche pour lui donner la forme du récipient par contre-empreinte dans le moule. L'ébauche peut en outre subir un étirage au moyen d'une tige coulissante afin d'en minimiser le désaxement et d'uniformiser la répartition de la matière.

Le formage des récipients à l'échelle industrielle impose des temps de cycles extrêmement brefs. Pour une cadence ordinaire de production moderne (de l'ordre de 50 000 récipients par heure), le temps de cycle, mesuré entre l'introduction de l'ébauche dans le moule et l'évacuation du récipient formé, est compris entre 1 seconde et 2 secondes seulement. Les constructeurs visent des cadences encore supérieures, l'objectif de 100 000 récipients par heure étant jugé raisonnable à moyen terme. A cette cadence, la production individuelle de chaque moule est de plusieurs milliers de récipients par heure.

Le risque d'apparition de défauts de forme affectant les récipients croît cependant en proportion de l'augmentation de la cadence. Au nombre des défauts de forme les plus fréquents figurent une mauvaise prise d'empreinte et une mauvaise répartition de la matière, souvent corrélées. Il est connu que ces défauts peuvent être liés à divers paramètres machine, notamment la température de chauffe des ébauches, la pression et le débit de fluide, ou encore la vitesse d'étirage.

La modification manuelle de ces paramètres suppose une connaissance fine, par les opérateurs, des corrélations pouvant exister entre la variation appliquée à un paramètre donné et la conséquence de cette variation sur la correction d'un défaut de forme. Face aux erreurs constatées et à la lenteur du processus laissant l'opérateur libre des réglages instantanés de la machine, plusieurs constructeurs se sont engagés dans une automatisation intégrale du pilotage de la machine.

La demanderesse a déjà contribué à cette tendance en systématisant l'analyse de courbes de soufflage pour y détecter des points singuliers susceptibles de témoigner de la conformité (ou, au contraire, de la non-conformité) du récipient à un modèle prédéfini, la modification de paramètres machine pouvant être commandée en cas de non-conformité, cf. notamment les documents WO 2008/081107 et WO 2012/035260.

Il est connu de piloter les machines par l'intermédiaire de systèmes de commande automatisés.

Il est envisageable de centraliser la commande machine au sein d'un système unique, ce qui implique pour celui-ci de conduire simultanément :

- en temps réel, des opérations de pilotage du cycle en cours par commande des organes de la machine suivant des consignes préétablies, telles que la pression et le débit de soufflage, ou encore la vitesse d'étirage, ou encore des opérations de mesure de paramètres (par exemple la pression régnant dans le récipient en cours de formation),
- en différé, des opérations utiles à la bonne conduite du (ou des) cycle(s) suivant(s), l'analyse de mesures, le calcul et l'implémentation de nouvelles consignes.

Une telle centralisation se heurte toutefois aux limites des performances des processeurs, en raison du volume élevé de données à traiter et de la vitesse à laquelle ces données doivent être traitées pour tenir les cadences de production. Le risque est élevé de provoquer une surcharge du processeur, avec pour conséquence un dysfonctionnement de la machine. Une solution évidente serait de limiter les cadences ou le nombre de postes de formage par machine, mais cette solution irait à l'encontre des exigences du marché, tendant au contraire à l'augmentation des cadences.

Dans la demande de brevet européen EP 2 098 356, il est proposé d'affecter un système de commande à chaque station de soufflage d'une roue de soufflage, chaque système commandant aussi bien l'injection que l'entraînement d'un élément d'étirage. En d'autres termes, ce document propose de décentraliser totalement la commande machine, à l'exception du déclenchement des opérations, qui est commandé par un système central, lequel reçoit d'un capteur une information de position d'angle de la roue de soufflage, relayée vers le système de commande de chaque station de soufflage.

Une telle décentralisation n'est toutefois pas pleinement satisfaisante. En effet, chaque système de commande étant autonome, des dérives peuvent se produire dans la qualité des récipients produits sans qu'il soit aisé d'en détecter les causes et la localisation sur la machine. En d'autres termes, on peut constater des variations dans la qualité des récipients produits sans qu'il soit toutefois possible de l'uniformiser.

Un premier objet de l'invention est d'optimiser le contrôle d'une machine (ou unité) de formage de récipients.

Un deuxième objet est de favoriser une augmentation des capacités de production, et en particulier une augmentation des cadences.

Un troisième objet est d'optimiser (et notamment d'uniformiser) la qualité des récipients produits sur une machine de formage.

A cet effet, il est proposé, en premier lieu, un système de commande d'une unité de formage de récipients à partir d'ébauches en matière thermoplastique

équipée d'une série de postes de formage munis chacun d'un moule à l'empreinte d'un récipient, ce système comprenant une unité de contrôle maître et une série de contrôleurs esclaves asservis à l'unité de contrôle maître et associés chacun à au moins un poste de formage, chaque contrôleur étant programmé pour :

-   piloter le ou chaque poste de formage associé selon une consigne de formage chargée dans le contrôleur ;
-   prendre en compte une mesure de pression dans le moule,
-   à partir de cette mesure, établir une courbe de soufflage décrivant l'évolution de la pression de fluide dans le moule,
-   analyser la courbe de soufflage et en extraire les coordonnées d'au moins un point singulier,
-   communiquer le point singulier à l'unité de contrôle, l'unité de contrôle étant programmée pour :
-   piloter les contrôleurs,
-   prendre en compte le ou chaque point singulier communiqué par chaque contrôleur,
-   calculer un point caractéristique fonction du ou des points singuliers(s),
-   comparer le point caractéristique avec un point théorique mémorisé dans l'unité de contrôle,
-   si un écart est décrété entre le point caractéristique et le point théorique, édicter une consigne de formage corrigée,
-   charger la consigne de formage corrigée dans le ou chaque contrôleur.

Diverses caractéristiques supplémentaires peuvent être prévues, seules ou en combinaison :

-   le point caractéristique est une moyenne de points singuliers communiqués par un même contrôleur ou par plusieurs contrôleurs ;
-   chaque contrôleur est associé à deux postes de formage ;
-   chaque poste de formage étant équipé d'un dispositif d'injection comprenant un bloc d'actionneurs piloté par le contrôleur, la consigne de formage comprend des valeurs de pression et/ou de débit d'un fluide délivré par ledit bloc, ou un instant de commande du bloc d'actionneurs ;
-   chaque poste de formage comprenant une pièce (par exemple une tige d'étirage) mobile dont le mouvement est piloté par le contrôleur, la consigne comprend un profil de déplacement de la pièce ;
-   les postes de formage décrivant un trajet incluant un secteur de formage s'étendant depuis un point de charge des ébauches jusqu'à un point de décharge des récipients formés, et un secteur tampon, complémentaire du secteur de formage et s'étendant depuis le point de décharge jusqu'au point de charge, l'unité de contrôle est programmée pour charger la consigne de formage modifiée dans le ou chaque contrôleur lorsque le ou chaque poste de formage associé se trouve dans le secteur tampon ;
-   l'unité de formage comprenant une roue sur laquelle sont montés les postes de formage, et un capteur de position angulaire de la roue, chaque contrôleur est programmé pour prendre en compte la position angulaire instantanée de la roue, en déduire la position angulaire du ou de chaque poste de formage associé et établir la courbe de soufflage à partir des pressions mesurées aux instants correspondant à chacune de ces positions angulaires.

Il est proposé, en deuxième lieu, une unité de formage de récipients à partir d'ébauches en matière thermoplastique, équipée d'une série de postes de formage munis chacun d'un moule à l'empreinte d'un récipient, et d'un système de commande tel que présenté ci-dessus.

Il est proposé, en troisième lieu, une installation de fabrication de récipients à partir d'ébauches en matière thermoplastique, équipée d'une unité de formage telle qu'évoquée ci-dessus.

D'autres objets et avantages de l'invention apparaîtront à la lumière de la description d'un mode préféré de réalisation, faite ci-après en référence aux dessins annexés dans lesquels :

-   la figure 1 est une vue schématique montrant une installation de fabrication de récipients, comprenant une unité de formage et une unité de chauffe ;
-   la figure 2 est une vue schématique illustrant plus en détail l'architecture de l'installation ;
-   la figure 3 est une vue schématique illustrant les positions angulaires d'une roue de l'unité de formage ;

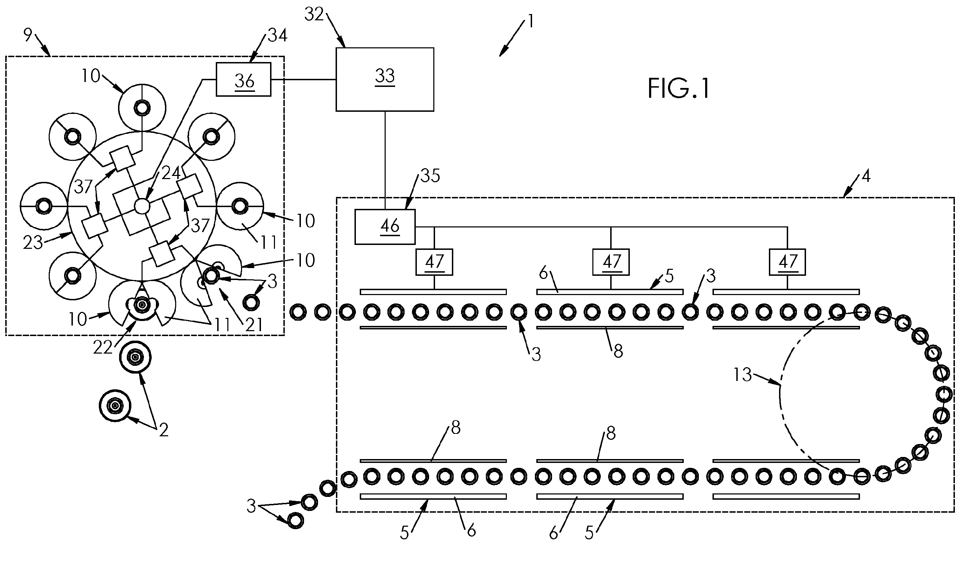

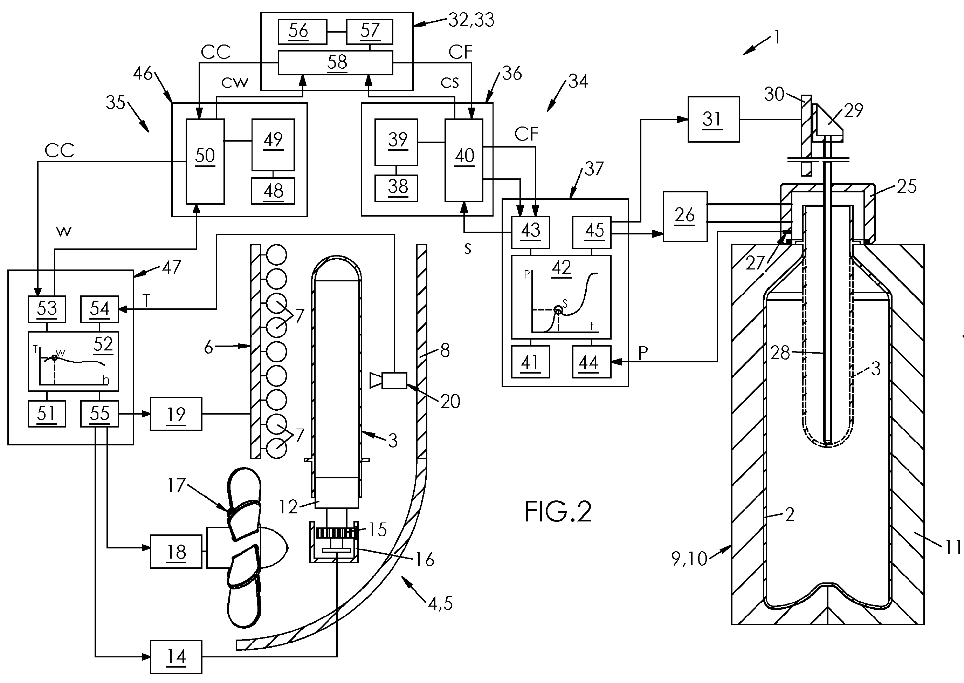

On a représenté schématiquement sur les figures 1 et 2 une installation 1 de fabrication de récipients 2 à partir d'ébauches 3 en matière thermoplastique, par exemple en n PET (polyéthylène téréphtalate).

L'installation 1 comprend au moins deux unités 4, 9 de traitement des récipients 2 ou des ébauches 3. Pour simplifier, on suppose dans ce qui suit que les ébauches 3 sont des préformes.

Typiquement, comme dans l'exemple illustré, l'installation comprend :

une unité 4 de chauffe ou four, qui comprend une série de modules 5 de chauffe ayant chacun une paroi 6 rayonnante munie de sources 7 superposées de rayonnement infrarouge et une paroi 8 réfléchissante placée en face de la paroi 6 rayonnante pour réfléchir la portion de rayonnement non absorbé par les préformes 3,

une unité 9 de formage par soufflage ou étirage soufflage, équipée d'au moins un poste 10 (et en l'espèce d'une série de postes) de formage, le ou chaque poste 10 de formage étant muni d'un moule 11 à l'empreinte d'un récipient.

De manière classique, les préformes **3** à température ambiante sont introduites dans le four **4** par une entrée de celui-ci, par exemple au moyen d'une roue ou d'un convoyeur d'alimentation. Puis les préformes **3** sont chauffées au défilé dans le four **4** à une température supérieure à la température de transition vitreuse de la matière (la température finale des ébauches est de l'ordre de 120°C pour le PET, dont la température de transition vitreuse est d'environ 80°C).

Dans le four **4,** les préformes **3** sont par exemple montées sur des supports **12** pivotants ou tournettes. Chaque tournette **12** est montée sur une chaîne circulant sur une roue **13** motrice entraînée en rotation par un moteur **14.** La tournette **12** est munie d'un pignon **15** qui engrène une crémaillère **16** pour entraîner la tournette **12** en rotation pendant son défilement dans le four **4** et ainsi exposer la surface de chaque préforme **3** au rayonnement.

Pour évacuer au moins une partie de la chaleur excédentaire produite par la paroi **6** rayonnante, le four **4** peut être équipé d'un système d'extraction comprenant par exemple un ventilateur **17** entraîné par un moteur **18** et positionné au droit des cols des préformes **3.**

En outre, la puissance du rayonnement émis par la paroi **6** rayonnante peut être modulée au moyen d'un variateur **19** de puissance, comme dans l'exemple de réalisation illustré sur la figure 2.

Le profil thermique des préformes **3** est de préférence contrôlé, soit directement dans le four **4** soit en sortie de celui-ci, au moyen d'un capteur **20** thermique. Selon un mode de réalisation illustré sur la figure **2,** le capteur **20** thermique est une caméra thermique pointant vers les préformes **3.**

A la sortie du four **4,** les préformes **3** ainsi chauffées sont transférées vers l'unité **9** de formage via une unité de transfert (telle qu'une roue de transfert) pour être soufflées ou étirées soufflées individuellement dans un moule **11.** Les préformes **3** sont introduites dans l'unité **9** de formage en un point **21** de charge.

A l'issue du formage, les récipients **2** sont évacués des moules **11** depuis un point **22** de décharge en vue d'être directement remplis et étiquetés, ou stockés temporairement en vue d'être remplis et étiquetés ultérieurement. Une fois remplis et étiquetés, les récipients sont groupés et conditionnés, par exemple au sein d'une unité de fardelage qui enveloppe chaque groupe de récipients au moyen d'un film thermorétractable.

Comme on le voit également sur les figures 1 et 2, l'unité **9** de formage comprend une roue **23** pivotante sur laquelle sont montés les postes **10** de formage, et un capteur **24** de la position angulaire instantanée de la roue **23,** sous forme par exemple d'un codeur (c'est-à-dire, en pratique, un roulement instrumenté).

Chaque poste **10** de formage est équipé d'une tuyère **25** par laquelle un fluide (notamment un gaz tel que de l'air) est injecté dans le moule **11.** Chaque poste **10** de formage est également équipé d'un dispositif d'injection comprenant un bloc **26** d'actionneurs relié à la tuyère **25** pour commander l'injection du fluide. En outre, chaque poste **10** de formage est muni d'un dispositif **27** de mesure de la pression régnant dans le récipient en cours de formage. Dans l'exemple illustré, le dispositif **27** de mesure comprend un capteur de pression monté au niveau de la tuyère **25,** dans laquelle la pression en cours de formage est identique à la pression régnant dans le récipient **2.**

Selon un mode de réalisation correspondant à un procédé de formage par étirage soufflage, chaque poste **10** de formage comprend en outre une tige **28** d'étirage mobile, solidaire d'un chariot **29** monté en translation par rapport à un support **30.**

Le mouvement de la tige **28** est commandé de manière électromagnétique. A cet effet, le support **30** comprend une piste électromagnétique reliée à un moteur **31,** et le chariot **29** est lui-même magnétique. Le signe et la puissance du courant traversant la piste permettent de déplacer la tige **28** suivant un profil de déplacement prédéterminé, comprenant une direction et une vitesse de déplacement.

Comme illustré sur la figure 1, les postes **10** de formage décrivent un trajet (en l'espèce circulaire) qui inclut un secteur F de formage s'étendant depuis le point **21** de charge des préformes **3** jusqu'au point **22** de décharge des récipients **2** formés, et un secteur T tampon, complémentaire du secteur F de formage et s'étendant depuis le point **22** de décharge jusqu'au point de charge **21.**

L'installation **1** est équipée d'un système **32** de commande comprenant une unité **33** centrale de contrôle de l'installation **1** et, pour chaque unité **4, 9** de traitement, un système **34, 35** de commande dédié qui pilote de manière automatique le fonctionnement de l'unité **9, 4** respective.

Ainsi, l'unité **9** de formage est équipée d'un système **34** de commande dédié qui comprend une unité **36** de contrôle maître et une série de contrôleurs **37** esclaves asservis à l'unité **36** de contrôle maître.

L'unité **36** de contrôle maître est informatisée et comprend, comme illustré sur la figure 2 :

- une mémoire **38** dans laquelle sont inscrits des programmes de pilotage de l'unité **9** de formage,
- un processeur **39** relié à la mémoire **38** pour appliquer les instructions des programmes, et
- une interface **40** de communication reliée au processeur **39** pour la communication avec des entités communicantes externes, comme cela sera expliqué ci-après.

Chaque contrôleur **37** esclave est un contrôleur logique programmable, du type décrit dans W. Bolton, Programmable Logic Controllers, Newnes, cinquième édition, 2009.

Plus précisément, chaque contrôleur **37** comprend :

- une mémoire **41** dans laquelle sont inscrits des programmes de pilotage d'au moins un poste **10** de formage,
- un processeur **42** relié à la mémoire **41** pour appliquer les instructions du programme,
- une interface **43** de communication reliée au processeur **42** pour la communication avec l'unité **36** de contrôle maître via l'interface **40** de communication,
- une interface **44** d'entrée reliée d'une part au processeur **42** et d'autre part au dispositif **27** de mesure de la pression, notée P, régnant dans le moule **11,**
- une interface **45** de sortie reliée d'une part au processeur **42** et d'autre part au bloc **26** d'actionneurs et au moteur **31** de commande de la tige **28** d'étirage.

En variante, les interfaces **44, 45** d'entrée et de sortie sont rassemblées au sein d'une interface unitaire d'entrée/sortie.
Le contrôleur **37** est programmé pour effectuer les opérations suivantes :

- piloter le poste **10** de formage auquel il est associé (ou chaque poste **10** de formage auquel il est associé ; le contrôleur **37** peut par exemple être associé à deux postes **10** de formage) pour l'accomplissement d'un cycle complet de formage le long du secteur F de formage, depuis le chargement d'une préforme **3** au point **21** de charge jusqu'au déchargement du récipient **2** formé au point **22** de décharge, selon une consigne CF de formage chargée (c'est-à-dire inscrite) dans la mémoire **41** ;
- prendre en compte une mesure de la pression P dans le moule **11**. La mesure de pression est réalisée par le capteur **27** de pression en continu ou de manière séquentielle et régulière, à intervalles prédéterminés (par exemple de 5 ms) et communiquée au processeur **42** via l'interface **44** d'entrée ;
- à partir de la mesure de pression, établir pendant le cycle de formage une courbe de soufflage décrivant l'évolution de la pression P de fluide dans le moule **11** à chaque instant, noté t (en pratique aux instants, mesurés par l'horloge interne du processeur **42,** correspondant aux positions angulaires fournies par le capteur **27**), cette courbe (visible schématiquement sur la figure 2) étant établie par le processeur **42** et mémorisée au cours du cycle ;
- analyser en fin de cycle la courbe de soufflage et en extraire les coordonnées d'au moins un point S singulier (notamment un pic local de pression, typiquement un point B tel que défini dans la demande internationale WO 2008/081107) ;
- communiquer dès la fin du cycle les coordonnées du point singulier à l'unité **36** de contrôle maître.

La consigne de formage peut comprendre des valeurs de pression et/ou de débit du fluide délivré par le bloc **26** d'actionneurs, ou encore un profil de déplacement de la tige **28** ou de toute autre pièce mobile (par exemple un fond de moule couplé à la tige **28**), sous forme par exemple d'une courbe de vitesse de déplacement de la tige **28** (ou de toute autre pièce mobile) en fonction de sa position. La vitesse de déplacement de la tige **28** (ou de toute autre pièce mobile) peut être convertie par le processeur **42** du contrôleur **37** en puissance à délivrer par le moteur **31**. La consigne est appliquée par le processeur **42,** qui pilote le bloc **26** d'actionneurs et le moteur **31** via l'interface de sortie.
Le processeur **39** de l'unité **36** de contrôle maître est, quant à lui, programmé pour :

- piloter ses contrôleurs **37** esclaves,
- prendre en compte le ou chaque point S singulier communiqué par chaque contrôleur **37** à la fin du cycle accompli par le ou chaque poste **10** de formage associé,
- calculer un point CS caractéristique à partir du ou des point(s) S singulier(s). Ce point CS caractéristique peut être le point S singulier lui-même, communiqué au cours d'un cycle unique par un contrôleur **37,** ou une moyenne de points S singuliers communiqués au cours de plusieurs cycles successifs par un même contrôleur **37,** ou une moyenne de points S singuliers communiqués au cours d'un cycle unique par plusieurs contrôleurs **37,** ou encore une moyenne de points S singuliers communiqués au cours de plusieurs cycles successifs par plusieurs contrôleurs **37 ;**
- comparer ce point CS caractéristique, issu (ou calculé à partir) des mesures, avec un point théorique inscrit préalablement dans la mémoire **38** de l'unité **36** de contrôle maître et correspondant à un récipient modèle,
- si un écart est décrété entre le point CS caractéristique et le point théorique, édicter une consigne CF de formage corrigée, comprenant une valeur de pression et/ou de débit de fluide modifiée à délivrer par le bloc **26** d'actionneurs, ou un instant de commande du bloc **26** d'actionneurs, ou encore un profil de déplacement de la tige **28** (par exemple sous forme d'une courbe de vitesse de la tige **28** ou d'une courbe de puissance du moteur **31,** en fonction de la position de la tige **28**) ou d'une autre pièce mobile ;
- charger la consigne CF de formage corrigée dans le ou chaque contrôleur **37** piloté par l'unité **36** de contrôle maître,
- le cas échéant, communiquer le point CS caractéristique à l'unité **33** centrale de contrôle.

Lorsqu'aucun écart n'est décrété entre le point CS caractéristique et le point théorique, aucune consigne de formage corrigée n'est édictée par le processeur **39,** de sorte que pour le nouveau cycle de formage ou plusieurs cycles de formage ultérieurs, le contrôleur **37** esclave applique la consigne CF de formage du (ou des) cycle(s) précédent(s).
Dans l'hypothèse, évoquée ci-dessus, d'une correction de la consigne CF de formage, la nouvelle consigne CF est chargée dans le contrôleur **37** esclave lorsque le poste **10** de formage associé se trouve dans le secteur T tampon, de sorte à pouvoir être appliquée pour le cycle de formage suivant, dès le chargement d'une nouvelle préforme **2** au point **21** de charge.

L'information de position angulaire de la roue **23** est commune aux contrôleurs **37** et partagée. Elle peut être centralisée au niveau de l'unité **36** de contrôle maître, dont le processeur **39** est dans ce cas programmé pour communiquer, à intervalles prédéterminés (notamment de quelques millisecondes, par exemple 1 ms), via son interface **40** de communication, la position angulaire instantanée de la roue **23**, telle que mesurée par le capteur **24** de position angulaire dans un référentiel de coordonnées polaires centré sur l'axe de rotation de la roue, noté O.

Toutefois, selon un mode de réalisation préféré, le capteur **24** est relié directement, via un réseau informatique local (LAN) à l'ensemble des contrôleurs **37**. Dans ce cas, afin que l'information transmise par le capteur **24** via le réseau soit lisible par les contrôleurs, le capteur **24** intègre de préférence un convertisseur analogique / numérique.

Chaque contrôleur **37** esclave est quant à lui programmé pour :

- prendre en compte la position angulaire instantanée de la roue **23** dès que cette position lui est communiquée par l'unité **36** de contrôle maître ou directement par le capteur **24** de position angulaire,
- en déduire la position angulaire du ou de chaque poste **10** de formage associé au contrôleur **37** esclave et piloté par celui-ci, et
- établir la courbe de soufflage à partir des pressions mesurées dans la tuyère **25** de chaque moule associé, aux instants correspondant à chacune de ces positions angulaires.

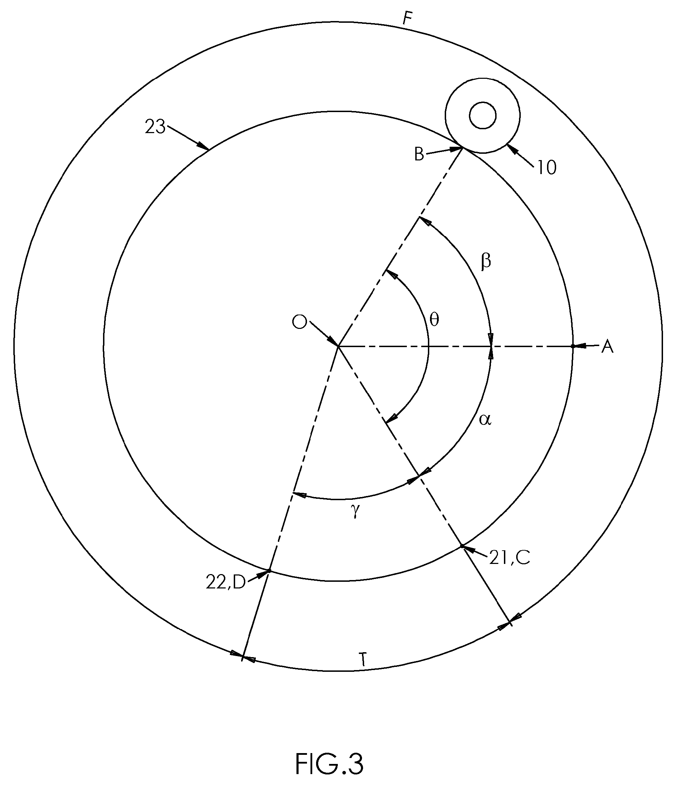

Le calcul de la position angulaire instantanée de chaque poste **10** de formage peut être réalisé de la manière simple suivante, en prenant comme référence (c'est-à-dire l'angle nul) le point **21** de charge (également noté C sur la figure 3).

On note A un point arbitraire fixe sur la roue **23,** considéré comme référence mobile fournissant la position angulaire du point **C** de charge, notée $\alpha$ et fournie par le capteur **24** de position, telle que $\alpha = \widehat{COA}$.

On note B le point correspondant à la position angulaire relative, notée $\beta$, du poste **10** de formage, mesurée par rapport au point A et telle que $\beta = \widehat{AOB}$.

En notant $\theta$ la position angulaire absolue du poste **10** de formage dans le référentiel polaire fixe ayant pour origine l'axe OC, cette position $\theta$ angulaire est telle que $\theta = \widehat{COB} = \widehat{COA} + \widehat{AOB} = \alpha + \beta$.

On note D le point **22** de décharge (fixe dans le référentiel polaire d'axe OC), dont la position angulaire, notée $\gamma$, est telle que $\gamma = \widehat{COD}$.

Ainsi, pour tout poste **10** de formage, le processeur **39** du contrôleur associé, dans la mémoire **38** duquel sont inscrites les valeurs des angles $\beta$ et $\gamma$, est à chaque instant capable de calculer l'angle $\theta$ par la formule indiquée ci-dessus et de déterminer si le poste **10** de formage se trouve dans le secteur F de formage, dans lequel $0 \leq \theta \leq 2\pi\text{-}\gamma$ (les angles étant exprimés en radians), ou dans le secteur T tampon, dans lequel $\theta > 2\pi\text{-}\gamma$.

Il résulte de l'architecture du système **34** de commande que les tâches nécessaires au fonctionnement de l'unité **9** de formage sont partagées entre l'unité **36** de contrôle maître et les contrôleurs **37** esclaves qui lui sont asservis.

Les tâches dévolues aux contrôleurs **37** comprennent le pilotage effectif des postes **10** de formage (notamment deux postes **10** par chaque contrôleur **37**), la prise de mesure et l'analyse de ces mesures pour en déduire des points S singuliers. Ces tâches sont effectuées en temps réel, au fur et à mesure de l'avancement du cycle, et nécessitent un traitement rapide.

Les tâches dévolues à l'unité **36** de contrôle comprennent l'analyse des données communiquées à chaque fin de cycle par les contrôleurs **37,** la prise de décision quant à l'opportunité de corriger ou non les consignes CF de formage, ainsi que l'éventuelle édiction et chargement de consignes CF de formage corrigées. Ces tâches sont effectuées pour chaque poste **10** de formage en différé, pendant que celui-ci parcourt le secteur T tampon lorsque les corrections de consigne sont prévues pour être appliquées d'un cycle à l'autre, ou pendant plusieurs cycles, lorsque l'unité **36** de contrôle effectue des calculs de points caractéristiques sur la base de moyennes de mesures effectuées sur plusieurs cycles.

Ce partage des tâches permet de limiter à la fois le volume de données à traiter et la vitesse à laquelle ces données doivent être traitées par l'unité **36** de contrôle. De la sorte, les calculs nécessaires à la conduite correcte des opérations de formage ne sont pas limitatifs de la cadence de production.

Comme cela est par ailleurs schématisé sur la figure 2, l'unité **4** de chauffe est également équipée d'un système **35** de commande dédié qui comprend une unité **46** de contrôle maître et une série de contrôleurs **47** esclaves asservis à l'unité de contrôle **46** maître.

L'unité **46** de contrôle maître est informatisée et comprend :

- une mémoire **48** dans laquelle sont inscrits des programmes de pilotage des modules **5** de chauffe,
- un processeur **49** relié à la mémoire **48** pour appliquer les instructions des programmes, et
- une interface **50** de communication reliée au processeur **49** pour la communication avec des entités communicantes externes.

Chaque contrôleur **47** esclave est un contrôleur logique programmable, du type décrit dans W. Bolton, Programmable Logic Controllers, Newnes, cinquième édition, 2009.

Plus précisément, chaque contrôleur **47** comprend :

- une mémoire **51** dans laquelle sont inscrits des programmes de pilotage d'au moins un module **5** de chauffe,
- un processeur **52** relié à la mémoire **51** pour appliquer les instructions du programme,
- une interface **53** de communication reliée au processeur **49** pour la communication avec l'unité **46** de contrôle maître via sa propre interface **50** de communication,
- une interface **54** d'entrée reliée d'une part au processeur **52** et d'autre part au capteur **20** thermique,
- une interface **55** de sortie reliée d'une part au processeur **52** et d'autre part au variateur **19** de puissance et aux moteurs **14, 18** du de la roue **13** motrice et du ventilateur **17**.

Le contrôleur **47** est programmé pour effectuer les opérations suivantes :

- piloter le ou chaque module **5** de chauffe auquel il est associé, selon une consigne CC de chauffe chargée (c'est-à-dire inscrite) dans la mémoire **51** ;
- à partir de la mesure de température (notée T) issue du capteur **20** thermique, établir le profil thermique instantané de chaque préforme **3**, qui peut se présenter sous forme d'une température moyenne mesurée pour l'ensemble de la préforme **3**, d'un ensemble de plusieurs valeurs de température à différentes hauteurs sur le corps de la préforme **3**, ou d'une courbe donnant la température T en fonction de la hauteur (notée h) sur la préforme **3** ;
- analyser le profil thermique et en extraire les coordonnées d'au moins un point W singulier (par exemple à une hauteur donnée au voisinage du col) ;
- communiquer pour chaque préforme **3**, ou à intervalles prédéterminés, les coordonnées du point W singulier à l'unité **46** de contrôle maître.

La consigne CC de chauffe peut comprendre une valeur de puissance délivrée par le variateur **19**, une vitesse de rotation du moteur **18** du ventilateur **17**, ou encore une vitesse de rotation de la roue **13** motrice (et donc, par voie de conséquence, une vitesse de défilement des préformes **3** - en d'autres termes la cadence de production du four **4**).

Le processeur **49** de l'unité **46** de contrôle maître est, quant à lui, programmé pour :

- piloter ses contrôleurs **47** esclaves,
- prendre en compte le ou chaque point W singulier communiqué par chaque contrôleur **47**,

- calculer un point CW caractéristique à partir du ou des point(s) W singulier(s). Ce point CW caractéristique peut être le point W singulier communiqué à un instant prédéterminé par le contrôleur **47**, ou une moyenne de points W singuliers communiqués au cours d'une période prédéterminée par un même contrôleur **47** ;
- comparer ce point CW caractéristique avec un point théorique inscrit préalablement dans la mémoire **48** de l'unité **46** de contrôle maître et correspondant à une préforme ayant donné un récipient modèle,
- si un écart est décrété entre le point CW caractéristique et le point théorique, édicter une consigne CC de chauffe corrigée, comprenant une valeur modifiée pour la puissance du variateur **19**,

ou encore pour la vitesse de rotation du moteur **18** du ventilateur **17** ou de la roue **13** motrice ;

- charger la consigne CC de chauffe corrigée dans le ou chaque contrôleur **47** piloté par l'unité **46** de contrôle maître ;
- le cas échéant, communiquer le point CW caractéristique à l'unité **33** centrale de contrôle,

Lorsqu'aucun écart n'est décrété entre le point CW caractéristique et le point théorique, aucune consigne de chauffe corrigée n'est édictée par le processeur, de sorte que le contrôleur **47** poursuit le pilotage du (ou de chaque) module **5** de chauffe selon la consigne CC de chauffe précédente.

Comme cela est illustré sur les figures, l'unité **33** centrale de contrôle de l'installation **1** comprend :

- une mémoire **56** dans laquelle sont inscrit des programmes de pilotage des unités **36, 46** de contrôle des systèmes **34, 35** de commande dédiés, ces unités **36, 46** de contrôle étant ainsi asservies à l'unité **33** centrale de contrôle (en d'autres termes, les unités **36, 46** de contrôle sont maîtres des contrôleurs **37, 47,** et esclaves de l'unité **33** centrale de contrôle) ;
- un processeur **57** relié à la mémoire **56** pour appliquer les instructions des programmes, et
- une interface **58** de communication reliée au processeur **57** pour la communication avec les unités **36, 46** de contrôle.

Le processeur **57** de l'unité **33** centrale de contrôle est programmé pour piloter chaque unité **36, 46** de contrôle, selon une consigne CF, CC de traitement chargée dans le processeur **39, 49** de chaque unité **36, 46** de contrôle.

On a vu que les unités **36, 46** de contrôle peuvent transmettre à l'unité **33** centrale de contrôle les points CS, CW caractéristiques.

Cette transmission permet au processeur **57** de l'unité **33** centrale de contrôle de piloter le fonctionnement de chaque unité **4** (respectivement **9**) de traitement en fonction de mesures issues d'une autre unité de traitement **9** (respectivement **4**).

Plus précisément, le processeur **57** de l'unité **33** centrale de contrôle est programmé pour :

- prendre en compte au moins un point CS, CW caractéristique qui lui est communiqué par une première unité **36** (respectivement **46**) de contrôle,
- comparer ce point caractéristique avec un point théorique inscrit dans la mémoire **56** de l'unité **33** centrale de contrôle,
- si un écart est décrété entre le point singulier et le point théorique, édicter une consigne CC, CF de traitement corrigée à destination d'une deuxième unité **46** (respectivement **36**) de contrôle, et
- charger cette consigne CC, CF de traitement corrigée dans la deuxième unité **46** (respectivement **36**) de contrôle.

Cette séquence d'opérations peut notamment être déclenchée dans le cas où une première correction de consigne effectuée au niveau d'un système **34** (respectivement **35**) de commande dédié à une unité **9** (respectivement **4**) de traitement donnée ne supprime pas (ou ne diminue pas), au cycle suivant (ou sur un nombre prédéterminé de cycles), l'écart constaté entre le point CS, CW caractéristique et le point théorique.

Elle peut également être déclenchée dans le cas où il est connu (et donc programmé) que seule la correction d'une consigne CC, CF de traitement à destination de la deuxième unité **46** (respectivement **36**) de contrôle est susceptible d'affecter (et donc de corriger) les mesures effectuées sur la première unité **9** (respectivement **4**) de traitement.

Dans l'exemple illustré, la qualité du récipient **2** final obtenu en sortie de l'unité **9** de formage dépend notamment de la température T de chauffe, laquelle est réglée dans l'unité **4** de chauffe. La température T de chauffe des préformes **3** peut en effet varier en fonction :

- de l'intensité du rayonnement délivré par les modules **5** de chauffe, laquelle dépend de la puissance électrique qui leur est délivrée, modulée par le variateur **19,**
- de la puissance de la ventilation, réglée par la vitesse de rotation du ventilateur **17,** laquelle est modulée par le moteur **18,**
- de la vitesse de défilement des préformes **3,** laquelle est modulée par le moteur **14** de la roue **13.**

Ainsi, on comprend qu'un changement de consigne CC affectant la température T de chauffe au sein de l'unité **4** de chauffe aura pour conséquence une modification de la courbe de soufflage, et en particulier la position du point S singulier détecté dans celle-ci par le processeur **39** du contrôleur **37**. Ce changement de consigne CC est effectué selon la procédure suivante, grâce à la programmation décrite précédemment :

- après avoir établi la courbe de soufflage, le contrôleur **37** en fait l'analyse et en extrait les coordonnées du point S singulier (typiquement le point B), et communique ces coordonnées à l'unité **36** de contrôle de l'unité **9** de formage ;
- ayant décrété qu'une modification de la consigne CF de formage est insuffisante pour obtenir la correction souhaitée de la position du point S singulier sur la courbe de soufflage au cycle suivant ou dans un nombre prédéterminé de cycles suivants, l'unité **36** de contrôle communique les coordonnées du point **CS** caractéristique à l'unité **33** centrale de contrôle ;
- l'unité **33** centrale de contrôle, programmée à cet effet, détermine que la courbe de soufflage peut être corrigée grâce à une modification de la température T de chauffe, ou de la vitesse de rotation du ventilateur **17,** ou encore de la vitesse de défilement des préformes **3** (en d'autres termes la vitesse de rotation de la roue **13**) et édicte une consigne CC de chauffe corrigée à l'attention de l'unité **46** de contrôle de l'unité **4** de chauffe ;
- l'unité **33** centrale de contrôle charge la consigne CC de chauffe ainsi corrigée dans l'unité **46** de contrôle de l'unité **4** de chauffe ;
- l'unité **46** de contrôle pilote les contrôleurs **47** en appliquant la consigne CF de chauffe ainsi corrigée.

Cette architecture présente plusieurs avantages.

Premièrement, elle permet de désengorger le système **32** de commande de l'installation en partageant les tâches entre plusieurs niveaux de commande reliés les uns aux autres suivant le principe maître-esclave :

- les contrôleurs **37, 47** sont programmés pour conduire des opérations de bas niveau et sur des temps courts, incluant la commande (analogique) de composants mécaniques ;
- les unités **36, 46** de contrôle sont programmées pour conduire des opérations de niveau intermédiaire et sur des temps relativement plus longs, incluant le calcul de points caractéristiques (notamment des moyennes) en fonction de mesures reçues des contrôleurs **37, 47,** la comparaison avec des valeurs de référence, l'édiction de consignes (éventuellement corrigées) et le pilotage, en fonction de ces consignes, des contrôleurs **37, 47 ;**
- l'unité **33** centrale de contrôle est programmée pour conduire des opérations de niveau supérieur et sur des temps longs, incluant la prise en compte de données communiquées par les unités **36, 46** de contrôle, l'édiction de consignes et le pilotage, en fonction de ces consignes, des unités **36, 46** de contrôle.

Deuxièmement, cette architecture permet un dialogue entre les différentes unités **4, 9** de traitement de l'installation **1,** sans qu'il soit nécessaire de centraliser l'ensemble des opérations au sein de l'unité **33** centrale de contrôle, à laquelle peuvent ainsi n'être affectées que des tâches de prise de décision, de correction de consignes CF, CC et de chargement des consignes CF, CC corrigées dans les unités **36, 46** de contrôle qui lui sont asservies.

Troisièmement, grâce au dialogue entre les différents niveaux de commande, la programmation de l'ensemble du système **32** de commande peut être centralisée au niveau supérieur, c'est-à-dire dans l'unité **33** centrale de contrôle, qui peut relayer aux unités **36, 46** de contrôle le programme qui leur est dédié ainsi que le programme dédié aux contrôleurs **37, 47,** les unités **36, 46** de contrôle relayant à leur tour aux contrôleurs **37, 47** le programme dédié à ceux-ci. Il n'est donc pas nécessaire de charger les programmes individuellement dans chaque contrôleur **37, 47,** ni même dans chaque unité **36, 46** de contrôle. Il en résulte une simplification de la programmation de l'installation, et une productivité accrue.

Quatrièmement, cette architecture permet de réaliser une rétroaction transversale, c'est-à-dire de commander une modification de la consigne appliquée par une unité de traitement - typiquement l'unité **4** de chauffe - en fonction de mesures effectuées au sein d'une autre unité de traitement - typiquement l'unité **9** de formage. La qualité des récipients produits s'en trouve améliorée.

**Revendications**

1. Système **(34)** de commande d'une unité **(9)** de formage de récipients **(2)** à partir d'ébauches **(3)** en matière thermoplastique équipée d'une série de postes **(10)** de formage munis chacun d'un moule **(11)** à l'empreinte d'un récipient **(2),** ce système **(34)** comprenant une unité **(36)** de contrôle maître et une série de contrôleurs **(37)** esclaves asservis à l'unité **(36)** de contrôle maître et associés chacun à au moins un poste **(10)** de formage, chaque contrôleur **(37)** étant programmé pour :

   - piloter le ou chaque poste **(10)** de formage associé selon une consigne (CF) de formage chargée dans le contrôleur **(37)** ;
   - prendre en compte une mesure de pression dans le moule **(11),**
   - à partir de cette mesure, établir une courbe de soufflage décrivant l'évolution de la pression de fluide dans le moule **(11),**
   - analyser la courbe de soufflage et en extraire les coordonnées d'au moins un point (S) singulier,
   - communiquer le point (S) singulier à l'unité **(36)** de contrôle, et en ce que l'unité **(36)** de contrôle maître est programmée pour :

   - piloter les contrôleurs **(37),**
   - prendre en compte le ou chaque point (S) singulier communiqué par chaque contrôleur **(37),**
   - calculer un point (CS) caractéristique fonction du ou des points (S) singuliers(s),
   - comparer le point (CS) caractéristique avec un point théorique mémorisé dans l'unité **(36)** de contrôle,
   - si un écart est décrété entre le point caractéristique et le point théorique, édicter une consigne (CF) de formage corrigée,
   - charger la consigne (CF) de formage corrigée dans le ou chaque contrôleur **(37).**

2. Système **(34)** selon la revendication 1, **caractérisé en ce que** le point (CS) caractéristique est une moyenne de points singuliers (S) communiqués par un même contrôleur **(37)** ou par plusieurs contrôleurs **(37).**

3. Système **(34)** selon l'une des revendications précédentes, **caractérisé en ce que** chaque contrôleur **(37)** est associé à deux postes **(10)** de formage.

4. Système **(34)** selon l'une des revendications précédentes, **caractérisée en ce que**, chaque poste **(10)** de formage étant équipé d'un dispositif d'injection comprenant un bloc **(26)** d'actionneurs piloté par le contrôleur **(37),** la consigne (CF) de formage comprend des valeurs de pression et/ou de débit d'un fluide délivré par ledit bloc, ou un instant de commande du bloc d'actionneurs.

5. Système **(34)** selon l'une des revendications précédentes, **caractérisée en ce que**, chaque poste **(10)** de formage comprenant une pièce **(28)** mobile dont le mouvement est piloté par le contrôleur **(37),** la consigne (CF) de formage comprend un profil de déplacement de la pièce **(28).**

6. Système **(34)** selon l'une des revendications précédentes, **caractérisée en ce que**, les postes **(10)** de formage décrivant un trajet incluant un secteur (F) de formage s'étendant depuis un point **(21)** de charge des ébauches **(3)** jusqu'à un point **(22)** de décharge des récipients **(2)** formés, et un secteur (T) tampon, complémentaire du secteur (F) de formage et s'étendant depuis le point **(22)** de décharge jusqu'au point **(21)** de charge, l'unité **(36)** de contrôle est programmée pour charger la consigne (CF) de formage modifiée dans le ou chaque contrôleur **(37)** lorsque le ou chaque poste **(10)** de formage associé se trouve dans le secteur (T) tampon.

7. Système **(34)** selon l'une des revendications précédentes, **caractérisée en ce que**, l'unité **(9)** de formage comprenant une roue **(23)** sur laquelle sont montés les postes **(10)** de formage, et un capteur **(24)** de position angulaire de la roue **(23),** chaque contrôleur **(37)** est programmé pour prendre en compte la position angulaire instantanée de la roue **(23),** en déduire la position angulaire du ou de chaque poste **(10)** de formage associé et établir la courbe de soufflage à partir des pressions mesurées aux instants correspondant à chacune de ces positions angulaires.

8. Unité **(9)** de formage de récipients à partir d'ébauches en matière thermoplastique, équipée d'une série de postes **(10)** de formage munis chacun d'un moule **(11)** à l'empreinte d'un récipient, **caractérisée en ce qu'**elle est en outre équipée d'un système **(34)** de commande selon l'une des revendications précédentes.

9. Installation **(1)** de fabrication de récipients **(2)** à partir d'ébauches **(3)** en matière thermoplastique, **caractérisé en ce qu'**elle est équipée d'une unité **(9)** de formage selon la revendication 8.

**Patentansprüche**

1. Steuerungssystem (34) für eine Einheit (9) zum Formen von Behältern (2) aus Rohlingen (3) aus thermoplastischem Material, die mit einer Reihe von Stationen (10) zum Formen ausgestattet ist, die jeweils mit einer Form (11) mit dem Abdruck eines Behälters (2) versehen sind, wobei dieses System (34) eine übergeordnete Steuerungseinheit (36) und eine Reihe von untergeordneten Steuerungseinheiten (37) aufweist, die der übergeordneten Steuerungseinheit (36) untergeordnet sind und jeweils mindestens mit einer Station (10) zum Formen verbunden sind, wobei jede Steuerungseinheit (37) programmiert ist, um:

    - die oder jede verbundene Station (10) zum Formen nach einem Formsollwert (CF), der in die Steuerungseinheit (37) geladen ist, zu steuern;
    - eine Druckmessung in der Form (11) zu berücksichtigen,
    - ausgehend von dieser Messung eine Blaskurve zu erstellen, die die Entwicklung des Fluiddrucks in der Form (11) beschreibt,
    - die Blaskurve zu analysieren und daraus die Koordinaten von mindestens einem einzelnen Punkt (S) zu extrahieren,
    - den einzelnen Punkt (S) der Steuerungseinheit (36) mitzuteilen,

und wobei die übergeordnete Steuerungseinheit (36) programmiert ist, um:

    - die Steuerungseinheiten (37) zu steuern,
    - den oder jeden einzelnen Punkt (S), der von jeder Steuerungseinheit (37) mitgeteilt wird, zu berücksichtigen,
    - einen charakteristischen Punkt (CS) abhängig von dem einzelnen Punkt oder den einzelnen Punkten (S) zu berechnen,
    - den charakteristischen Punkt (CS) mit einem theoretischen Punkt zu vergleichen, der in der Steuerungseinheit (36) gespeichert ist,
    - wenn eine Abweichung zwischen dem charakteristischen Punkt und dem theoretischen Punkt bestimmt wird, einen korrigierten Formsollwert (CF) festzusetzen,
    - den korrigierten Formsollwert (CF) in die oder jede Steuerungseinheit (37) herunterzuladen.

2. System (34) nach Anspruch 1, **dadurch gekennzeichnet, dass** der charakteristische Punkt (CS) ein Mittelwert von einzelnen Punkten (S) ist, die von einer gleichen Steuerungseinheit (37) oder von mehreren Steuerungseinheiten (37) mitgeteilt werden.

3. System (34) nach einem der vorhergehenden Ansprüche, **dadurch gekennzeichnet, dass** jede Steuerungseinheit (37) mit zwei Stationen (10) zum Formen verbunden ist.

4. System (34) nach einem der vorhergehenden Ansprüche, **dadurch gekennzeichnet, dass**, nachdem jede Station (10) zum Formen mit einer Spritzvorrichtung ausgestattet ist, die einen Block (26) von Aktuatoren aufweist, der von der Steuerungseinheit (37) gesteuert wird, der Formsollwert (CF) Druckwerte und/oder Durchflusswerte eines Fluids, das von dem Block abgegeben wird, oder einen Steuerzeitpunkt des Blocks von Aktuatoren aufweist.

5. System (34) nach einem der vorhergehenden Ansprüche, **dadurch gekennzeichnet, dass**, nachdem jede Station (10) zum Formen ein bewegliches Teil (28) aufweist, dessen Bewegung von der Steuerungseinheit (37) gesteuert wird, der Formsollwert (CF) ein Bewegungsprofil des Teils (28) aufweist.

6. System (34) nach einem der vorhergehenden Ansprüche, **dadurch gekennzeichnet, dass** die Steuerungseinheit (36), nachdem die Stationen (10) zum Formen einen Weg beschreiben, der einen Formungsbereich (F), der sich von einem Punkt (21) des Ladens der Rohlinge (3) bis zu einem Punkt (22) des Entladens der geformten Behälter (2) erstreckt, und ein Pufferbereich (T) aufweist, der komplementär zu dem Formungsbereich (F) ist und sich von dem Punkt (22) des Entladens bis zu dem Punkt (21) des Ladens erstreckt, programmiert ist, um den modifizierten Formsollwert (CF) in die oder jede Steuerungseinheit (37) herunterzuladen, wenn sich die oder jede verbundene Station (10) zum Formen in dem Pufferbereich (T) befindet.

**7.** System (34) nach einem der vorhergehenden Ansprüche, **dadurch gekennzeichnet, dass** jede Steuerungseinheit (37), nachdem die Einheit (9) zum Formen ein Rad (23), auf dem die Stationen (10) zum Formen montiert sind, und einen Winkelpositionssensor (24) des Rades (23) aufweist, programmiert ist, um die augenblickliche Winkelposition des Rades (23) zu berücksichtigen, daraus die Winkelposition von der oder jeder verbundenen Station (10) zum Formen abzuleiten und die Blaskurve ausgehend von den Drucken, die zu den Zeitpunkten gemessen sind, die jeder dieser Winkelpositionen entsprechen, zu erstellen.

**8.** Einheit (9) zum Formen von Behältern aus Rohlingen aus thermoplastischem Material, die mit einer Reihe von Stationen (10) zum Formen ausgestattet ist, die jeweils mit einer Form (11) mit dem Abdruck eines Behälters versehen sind, **dadurch gekennzeichnet, dass** sie ferner mit einem Steuerungssystem (34) nach einem der vorhergehenden Ansprüche ausgestattet ist.

**9.** Anlage (1) zum Herstellen von Behältern (2) aus Rohlingen (3) aus thermoplastischem Material, **dadurch gekennzeichnet, dass** sie mit einer Einheit (9) zum Formen nach Anspruch 8 ausgestattet ist.

**Claims**

**1.** System (34) for controlling a unit (9) for forming containers (2) from blanks (3) of thermoplastic material equipped with a series of forming stations (10) each provided with a mould (11) with the imprint of a container (2), this system (34) comprising a master control unit (36) and a series of slave controllers (37) slaved to the master control unit (36) and each associated with at least one forming station (10), each controller (37) being programmed to:

- drive the or each associated forming station (10) according to a forming set point (CF) loaded in the controller (37);
- take account of a pressure measurement in the mould (11),
- from this measurement, establish a blowing curve describing the trend of the fluid pressure in the mould (11),
- analyse the blowing curve and extract therefrom the coordinates of at least one singular point (S),
- communicate the singular point (S) to the control unit (36),
- and in that the master control unit (36) is programmed to:
- drive the controllers (37),
- take account of the or each singular point (S) communicated by each controller (37),
- compute a characteristic point (CS) that is a function of the singular point or points (S),
- compare the characteristic point (CS) with a theoretical point stored in the control unit (36),
- if a deviation is detected between the characteristic point and the theoretical point, prescribe a corrected forming set point (CF),
- load the corrected forming set point (CF) into the or each controller (37).

**2.** System (34) according to Claim 1, **characterized in that** the characteristic point (CS) is an average of singular points (S) communicated by a same controller (37) or by a number of controllers (37).

**3.** System (34) according to one of the preceding claims, **characterized in that** each controller (37) is associated with two forming stations (10).

**4.** System (34) according to one of the preceding claims, **characterized in that**, each forming station (10) being equipped with an injection device comprising a block (26) of actuators driven by the controller (37), the forming set point (CF) comprises values of pressure and/or of flow rate of a fluid delivered by said block, or a control instant of the block of actuators.

**5.** System (34) according to one of the preceding claims, **characterized in that**, each forming station (10) comprising a mobile part (28), the movement of which is driven by the controller (37), the forming set point (CF) comprises a profile of displacement of the part (28).

**6.** System (34) according to one of the preceding claims, **characterized in that**, the forming stations (10) describing a path including a forming sector (F) extending from a point (21) of loading of the blanks (3) to a point (22) of unloading of the formed containers (2), and a buffer sector (T), complementing the forming sector (F) and extending from the unloading point (22) to the loading point (21), the control unit (36) is programmed to load the modified forming set point (CF) into the or each controller (37) when the or each associated forming station (10) is located in the buffer sector (T).

**7.** System (34) according to one of the preceding claims, **characterized in that**, the forming unit (9) comprising a wheel (23) on which are mounted the forming stations (10), and a sensor (24) of angular position of the wheel (23), each controller (37) is programmed to take account of the instantaneous angular position of the wheel (23), deduced there from the angular position of the or each associated forming station (10) and establish the blowing curve from the pressures measured at the instants corresponding to each of these angular positions.

8. Unit (9) for forming containers from blanks of thermoplastic material, equipped with a series of forming stations (10) each provided with a mould (11) with the imprint of a container, **characterized in that** it is further equipped with a control system (34) according to one of the preceding claims.

9. Installation (1) for manufacturing containers (2) from blanks (3) of thermoplastic material, **characterized in that** it is equipped with a forming unit (9) according to Claim 8.

FIG.1

FIG.2

EP 2 872 314 B1

FIG.3

## RÉFÉRENCES CITÉES DANS LA DESCRIPTION

**Documents brevets cités dans la description**

- WO 2008081107 A
- WO 2012035260 A

- EP 2098356 A

**Littérature non-brevet citée dans la description**

- **W. BOLTON.** Programmable Logic Controllers. Newnes, 2009